# EUROPÄISCHE PATENTSCHRIFT

(11) **EP 0 642 826 B1**
(45) Veröffentlichungstag und Bekanntmachung des Hinweises auf die Patenterteilung: **15.07.1998**
(21) Anmeldenummer: 94114306.7
(22) Anmeldetag: 12.09.1994
(51) Int. Cl.: B01J 20/20

(54) **Selektive Kohlefilter**
Selective carbon filter
Filtre de charbon sélectif

(30) Priorität: 13.09.1993 DE 4330990
(43) Veröffentlichungstag der Anmeldung: 15.03.1995
(73) Patentinhaber: MST MICRO-SENSOR-TECHNOLOGIE GMBH, D-82069 Hohenschäftlarn (DE)
(72) Erfinder: Nikolskaja, Elena J., Dr., 196233 Sankt Petersburg (RU); Maltzeva, Natalia W., Dr., 198188 Sankt Petersburg (RU); Loseva, Elena W., 198000 Sankt Petersburg (RU); Koroljeva, Evgenia B., Dr., 198000 Sankt Petersburg (RU)
(74) Vertreter: Böhm, Brigitte, Dipl.-Chem. Dr.

(56) Entgegenhaltungen:
- EP-A- 0 343 697
- EP-A- 0 369 171
- US-A- 4 795 735
- DATABASE WPI Section Ch, Week 9019, Derwent Publications Ltd., London, GB; Class E34, AN 90-140193 & DD-A-273 780 (AKAD. WISSENSCHAFT DDR) 29. November 1989
- PATENT ABSTRACTS OF JAPAN vol. 9, no. 228 (C-303) 13. September 1985 & JP-A-60 087 853 (MAZDA K.K.) 17. Mai 1985 & DATABASE WPI Section Ch, Week 8526, Derwent Publications Ltd., London, GB; Class H06, AN 85-156249 & JP-A-60 087 853 (TOYO KOGYO K.K.) 17. Mai 1985
- PATENT ABSTRACTS OF JAPAN vol. 17, no. 400 (C-1089) 27. Juli 1993 & JP-A-05 076 754 (MIZUSAWA IND. CHEM. LTD.) 30. März 1993 & DATABASE WPI Section Ch, Week 9317, Derwent Publications Ltd., London, GB; Class E31, AN 93-139724 & JP-A-5 076 754 (MIZUSAWA CHEM. IND. CO. LTD.) 30. März 1993

## Beschreibung

Die vorliegende Erfindung betrifft ein Verfahren zur Herstellung von Filtermaterial aus Aktivkohlepreßlingen, das Filtermaterial selbst, sowie seine Verwendung zur selektiven Trennung von organischen und anorganischen Phasen.

Es besteht nach wie vor ein großer Bedarf an Filtermaterialien, welche es erlauben, selektiv organische und anorganische Phasen zu trennen, und deren Herstellung einfach und kostengünstig ist. Aufgabe der vorliegenden Erfindung war es daher, derartige Filtermaterialien bereitzustellen.

Gelöst wird die Aufgabe durch ein Verfahren zur Herstellung von Filtermaterial aus Aktivkohlepreßlingen, mit Hilfe derer eine selektive Trennung von organischer und anorganischer Phase möglich ist, mit folgenden Schritten:
(a) Vermischen bis zur Homogenität von Aktivkohleteilchen mit einer Größe von 1 bis 100 µm mit Aluminiumoxid der Pseudobömith-Modifikation im Verhältnis 1:1 bis 5:1,
(b) Zugabe von destilliertem Wasser unter gutem Mischen,
(c) Zugabe von verdünnter Essigsäure unter gutem Mischen,
(d) erneute Zugabe von destilliertem Wasser,
(e) Formen von Tabletten oder ähnlichen Gebilden in einer Form unter Druck und
(f) aufeinanderfolgendes Erhitzen der Tabletten auf
   1) 80 bis 100°C für 6 bis 10 Stunden,
   2) 140 bis 160°C für 8 bis 10 Stunden,
   3) 180 bis 200°C für 6 bis 10 Stunden.

Die erfindungsgemäßen Aktivkohlefilter sind leicht und kostengünstig herzustellen und erlauben eine sehr selektive Trennung von anorganischen und organischen Phasen. Es ist hierbei bevorzugt, unter Punkt (a) Aktivkohleteilchen mit einer Größe von 10 bis 50 µm zu verwenden. Ebenfalls bevorzugt ist es, Aktivkohleteilchen und Aluminiumoxid im Verhältnis 2:1 bis 3:1 einzusetzen. In einer weiteren bevorzugten Ausführungsform der Erfindung wird destilliertes Wasser unter Punkt (b) und (d) zusammen in etwa der gleichen Menge eingesetzt, die dem Gewicht der Aktivkohleteilchen entspricht.

Bevorzugterweise wird mit einer 20 bis 40 %igen Essigsäure gearbeitet. Hierbei kann beispielsweise eine 85 %ige Essigsäure verwendet werden, welche etwa im Verhältnis 1:3 verdünnt wird.

Das Pressen wird vorzugsweise unter Schritt (e) mit einem Druck von 40 bis 60 kg/cm² und besonders bevorzugt bei einem Druck von 50 kg/cm² durchgeführt. Es ist hierbei nicht ausschlaggebend, in welcher Art von Form die Preßlinge hergestellt werden. Dies hängt auch von der beabsichtigten Anwendung ab. Eine weitere Möglichkeit besteht darin, die Formmasse vor dem Pressen nochmals mit destilliertem Wasser zu verdünnen, und zwar vorzugsweise mit etwa nochmal einer Menge an Wasser, welche ungefähr 1/3 bis 1/5 der eingesetzten Aktivkohlemenge entspricht. Dann wird mit einem Druck von 5 bis 20 kg/cm² gepreßt und besonders bevorzugt mit einem Druck von 10 kg/cm². Alle Mischoperationen werden sehr sorgfältig durchgeführt.

Ein weiterer Gegenstand der vorliegenden Erfindung ist ein Filtermaterial zur selektiven Abtrennung organischen Materials von einer anorganischen Phase, wobei das erfindungsgemäße Filtermaterial aus den nach dem erfindungsgemäßen Verfahren hergestellten Aktivkohlepreßlingen besteht.

Wiederum ein weiterer Gegenstand der vorliegenden Erfindung ist die Verwendung der erfindungsgemäßen Filtermaterialien zur selektiven Trennung von anorganischen und organischen Phasen.

Die vorliegende Erfindung wird durch das folgende Beispiel weiter erläutert.

### BEISPIEL 1

Zur Herstellung von erfindungsgemäßen Aktivkohlefiltern werden folgende Schritte durchgeführt:
1. Mischen von Aktivkohle in einer Menge von 20 g mit Aluminiumhydroxid von der Pseudobömith-Modifikation bis zur Homogenität. Das Massenverhältnis von Aktivkohle zu Aluminiumhydroxid liegt im Bereich von 2:1 bis 3:1. Die Aktivkohleteilchen sollten eine Größe im Bereich von 10 bis 50 µm aufweisen.
2. Mischen der angegebenen Komponenten mit 10 ml destilliertem Wasser.
3. Verdünnen von 3 ml 85 %iger Essigsäure mit destilliertem Wasser auf 10 ml und Zugabe dieser Lösung zu der Mischung als Peptisationsmittel und Plastifizierungsmittel.
4. Zugabe von 10 ml destilliertem Wasser zu der Mischung.
5. Herstellen von Tabletten unter Verwendung einer Tablettenform oder einer anderen Form. Die oben beschriebene Masse wird unter einem Druck von 50 kg/cm² zu Tabletten verpreßt. Wenn mit einem Druck von 10 kg/cm² gearbeitet wird, wird die oben beschriebene Masse vorher nochmals mit 3 bis 5 ml destilliertem Wasser verdünnt. Alle Mischoperationen werden sehr sorgfältig bis zur vollen Homogenität durchgeführt.
6. Erhitzen der Tabletten in der Folge zuerst auf eine Temperatur von 80 bis 100°C für 6 bis 10 Stunden, dann auf eine Temperatur von 150°C für 8 bis 10 Stunden sowie schließlich einer Temperatur von 180 bis 200°C für 6 bis 10 Stunden.

## Patentansprüche

1. Verfahren zur Herstellung von Filtermaterial aus Aktivkohlepreßlingen, mit Hilfe derer eine selektive Trennung von organischer und anorganischer Phase möglich ist, mit folgenden Schritten:
(a) Vermischen bis zur Homogenität von Aktivkohleteilchen mit einer Größe von 1 bis 100 µm mit Aluminiumoxid der Pseudobömith-Modifikation im Verhältnis 1:1 bis 5:1,
(b) Zugabe von destilliertem Wasser unter gutem Mischen,
(c) Zugabe von verdünnter Essigsäure unter gutem Mischen,
(d) erneute Zugabe von destilliertem Wasser,
(e) Formen von Tabletten oder ähnlichen Gebilden in einer Form unter Druck und
(f) aufeinanderfolgendes Erhitzen der Tabletten auf
1) 80 bis 100°C für 6 bis 10 Stunden,
2) 140 bis 160°C für 8 bis 10 Stunden,
3) 180 bis 200°C für 6 bis 10 Stunden.

2. Verfahren nach Anspruch 1,
**dadurch gekennzeichnet,**
daß man unter Punkt (a) Aktivkohleteilchen mit einer Größe von 10 bis 50 µm verwendet.

3. Verfahren nach Anspruch 1 oder 2,
**dadurch gekennzeichnet,**
daß man unter (a) Aktivkohleteilchen und Aluminiumoxid im Verhältnis 2:1 bis 3:1 einsetzt.

4. Verfahren nach einem der Ansprüche 1 bis 3,
**dadurch gekennzeichnet,**
daß die verwendete Menge an destilliertem Wasser unter (b) und (d) zusammen etwa dem Gewicht der Aktivkohleteilchen entspricht.

5. Verfahren nach einem der vorhergehenden Ansprüche,
**dadurch gekennzeichnet,**
daß man unter Punkt (c) 20 bis 40 %ige Essigsäure verwendet.

6. Verfahren nach einem der vorhergehenden Ansprüche,
**dadurch gekennzeichnet,**
daß man unter Schritt (e) mit einem Druck von 40 bis 60 kg/cm² arbeitet.

7. Verfahren nach einem der Ansprüche 1 bis 5,
**dadurch gekennzeichnet,**
daß man die Preßmasse vor dem Pressen nochmals mit destilliertem Wasser verdünnt und bei 10 kg/cm² preßt.

8. Filtermaterial zur selektiven Abtrennung organischen Materials von einer anorganischen Phase, bestehend aus Aktivkohlepreßlingen, erhältlich gemäß dem Verfahren nach einem der Ansprüche 1 bis 7.

9. Verwendung von Filtermaterialien gemäß Anspruch 8 zur selektiven Trennung von organischen und anorganischen Phasen.

## Claims

1. The method of preparing compacted activated charcoal filter material, which facilitates the selective separation of organic from inorganic phases, comprising the following steps:
(a) homogeneously mixing activated charcoal particles having a particle size of 1 to 100 µm with the pseudoboehmite-modification of aluminium oxide in a ratio of 1:1 to 5: 1,
(b) adding distilled water accompanied by thorough mixing,
(c) adding dilute acetic acid accompanied by thorough mixing,
(d) adding additional distilled water,
(e) compacting into tablets or the like in a mould under pressure, and
(f) successively heating the tablets
1) at 80°C to 100°C for 6 to 10 hours
2) at 140°C to 160°C for 8 to 10 hours
3) at 180°C to 200°C for 6 to 10 hours.

2. The method of claim 1
wherein
the particle size of the activated charcoal particles of (a) is 10 to 50 µm.

3. The method of claim 1 or 2
wherein
the ratio of activated charcoal particles to aluminium oxide of (a) is from 2:1 to 3:1.

4. The method of one of claims 1 to 3
wherein
the total amount of distilled water used in (b) and (d) corresponds approximately to the weight of the activated charcoal particles.

5. The method of one of the previous claims
wherein
the acetic acid used in (c) is 20 to 40% acetic acid.

6. The method of one of the previous claims
wherein
the pressure used in (e) is 40 to 60 kg/cm².

7. The method of one of claims 1 to 5
wherein
the compaction composition is diluted with additional distilled water prior to compacting at a pressure of 10 kg/cm²,

8. Filter material for selectively separating organic material from an inorganic phase, consisting of activated charcoal compacts obtainable by the method of one of claims 1 to 7.

9. Use of filter materials according to claim 8 for selectively separating organic from inorganic phases.

## Revendications

1. Procédé de préparation d'une matière filtrante a partir d'agglomérés de charbon actif, qui permet une séparation sélective de phases organiques et inorganiques, comprenant les étapes :
(a) de mélange jusqu'à homogénéité de particules de charbon actif d'une dimension de 1 à 100 µm avec de l'oxyde d'aluminium de la variété pseudoboehmite dans le rapport de 1:1 à 5:1,
(b) d'addition d'eau distillée avec un bon brassage,
(c) d'addition d'acide acétique dilué avec un bon brassage,
(d) de nouvelle addition d'eau distillée,
(e) de façonnage d'agglomérés ou de structures analogues dans un moule sous pression et
(f) de chauffage successif des agglomérés
1) de 80 à 100°C pendant 6 à 10 heures,
2) de 140 à 160°C pendant 8 à 10 heures,
3) de 180 à 200°C pendant 6 à 10 heures.

2. Procédé selon la revendication 1, caractérisé en ce que, sous a), on utilise des particules de charbon actif d'une dimension de 10 à 50 µm.

3. Procédé selon la revendication 1 ou 2, caractérisé en ce que, sous a), on met en oeuvre des particules de charbon actif et de l'oxyde d'aluminium dans le rapport de 2:1 à 3:1.

4. Procédé selon l'une des revendications 1 à 3, caractérisé en ce que la quantité d'eau distillée employée sous (b) et (d) correspond approximativement au poids des particules de charbon actif.

5. Procédé selon l'une des revendications précédentes, caractérisé en ce que, sous (c), on utilise de l'acide acétique de 20 à 40%.

6. Procédé selon l'une des revendications précédentes, caractérisé en ce que, dans l'étape (e), on opère sous une pression de 40 à 60 kg/cm².

7. Procédé selon l'une des revendications 1 à 5, caractérisé en ce qu'avant le pressage, on dilue de nouveau la matière à mouler avec de l'eau distillée et comprime sous 10 kg/cm².

8. Matière filtrante pour la séparation sélective de matières organiques à partir d'une phase inorganique, consistant en des agglomérés de charbon actif, que l'on peut obtenir conformément au procédé selon l'une des revendications 1 à 7.

9. Utilisation de matières filtrantes selon la revendication 8 pour la séparation sélective de phases organiques et inorganiques.
